# EUROPEAN PATENT SPECIFICATION

(11) **EP 3 687 259 B1**
(45) Date of publication and mention of the grant of the patent: **05.04.2023**
(21) Application number: 18877235.4
(22) Date of filing: 31.10.2018
(51) Int. Cl.: H04W 88/04, H04W 60/04, H04W 28/02, H04W 92/18, H04W 84/04

(54) **COMMUNICATION METHOD AND DEVICE**
KOMMUNIKATIONSVERFAHREN UND -VORRICHTUNG
PROCÉDÉ ET DISPOSITIF DE COMMUNICATION

(30) Priority: 13.11.2017 CN 201711113391
(43) Date of publication of application: 29.07.2020
(73) Proprietor: Huawei Technologies Co., Ltd., Longgang District Shenzhen, Guangdong 518129 (CN)
(72) Inventor: HUANG, Zhenglei, Shenzhen Guangdong 518129 (CN)
(74) Representative: Maiwald GmbH
(86) International application number: PCT/CN2018/112883
(87) International publication number: WO 2019/091307

(56) References cited:
- EP-A1- 2 744 246
- EP-A2- 1 307 064
- WO-A1-2017/022039
- WO-A1-2017/191973
- CN-A- 101 990 324
- CN-A- 101 997 593
- CN-A- 103 476 140
- US-A1- 2008 165 776
- US-A1- 2012 315 903

## Description

### TECHNICAL FIELD

Embodiments of this application relate to the communications field, and in particular, to a communications method and apparatus.

### BACKGROUND

WO2017/191973A1 relates to a method for performing location registration by a remote user equipment (UE) in a wireless communication system, the method comprising the steps of transmitting a direct communication request message to a relay UE; receiving, from the relay UE, a direct communication response message including location registration period information and location registration performing time information, in response to the direct communication request message; and when the location registration performing time information expires, transmitting a first TAU request message to an MME, wherein the location registration period information is applied after the application of the location registration performing time information.

EP1307064A1 describes that a location register stores as location information of a relay device to area identification information of a location registration area where relay device is currently located and stores as location information of one or a plurality of mobile communication terminals transported in a moving object, relay device identification information of relay device to thereby subordinate one or more of a plurality of mobile communication terminals to relay device, and that in the case that a master/slave relationship should be discontinued with some of a plurality of mobile communication terminals, relay device transmits, to location register, a dependency registration removal request specifying the part of a plurality of mobile communication terminals, and that location register updates location information of the mobile communication terminals specified in the dependency registration removal request to area identification information of a location registration area in which relay device is currently located.

As the internet of things (Internet of Things, IoT) and mobile communications technologies develop, an IoT terminal (for example, a sensor) is widely used in fields such as measurement, construction, agriculture, logistics, smart city, and home. In the prior art, the IoT terminal directly accesses a communications network. However, because IoT terminals are increasingly densely deployed, an existing manner in which the IoT terminal accesses the communications network easily causes network congestion.

### SUMMARY

Embodiments of this application provide a communications method and apparatus, to avoid network congestion caused when an IoT terminal accesses a communications network.

In an aspect, there is provided a communication method as defined in appended claim 1. In another aspect, there is provided a communication apparatus as defined in appended claim 3.

According to a first example of the application, a communications method is provided. The method includes: obtaining, by a terminal device, a relay mode of the terminal device; sending, by the terminal device, relay mode information of the terminal device and registration information to a relay device, so that the relay device can send a registration request message to an AN node based on the relay mode information of the terminal device and the registration information. This improves registration flexibility of the terminal device, and can avoid network congestion caused when the terminal device accesses a communications network.

The relay mode corresponding to the relay mode information includes a long-term relay mode or a temporary relay mode.

The registration information includes identification information of the terminal device and/or identification information of a core network node with which the terminal device is registered; or the registration information is a registration request message. The registration request message may carry the identification information of the terminal device, and is used to request to register the terminal device. The identification information of the terminal device is used to identify the terminal device, and may be a permanent identifier such as an IMSI, or may be a temporary identifier such as a 5G-GUTI or a 5G-TMSI. Identification information of the relay device is used to identify the relay device, and may be a permanent identifier or a temporary identifier.

The obtaining, by a terminal device, a relay mode of the terminal device includes obtaining, by the terminal device, the relay mode of the terminal device based on an idle-state camping manner of the terminal device; In other examples not covered by the claimed invention, the obtaining, by the terminal device, the relay mode of the terminal device based on a preconfigured association relationship; or obtaining, by the terminal device, the relay mode of the terminal device based on a location of the terminal device. A method for obtaining the relay mode in this application may further include dynamically setting the relay mode by using a human-computer interaction interface. This is however not covered by the claimed invention.

In a preferred embodiment, the method further includes: receiving, by the terminal device, registration area information and/or registration update timer duration of the terminal device from the relay device, so that the relay device and the terminal device can simultaneously initiate registration procedures triggered by moving out of registration areas, and further, the relay device implements simultaneous registration of the relay device and the terminal device by sending one registration request message. A registration area corresponding to the registration area information of the terminal device is the same as a registration area of the relay device; and the registration update timer duration of the terminal device is the same as registration update timer duration of the relay device, so that the relay device and the terminal device can simultaneously initiate periodic registration update, and further, the relay device can implement simultaneous registration of the relay device and the terminal device by sending one registration request message.

According to a second example of the application, that is not covered by the claimed invention, a communications method is provided. The method includes: receiving, by a relay device, relay mode information of a terminal device and registration information from the terminal device; and sending, by the relay device, a registration request message to an access network AN node based on the relay mode information and the registration information. The registration request message may be used to request to register one or more devices (for example, the relay device and the terminal device, or at least two terminal devices). This improves registration flexibility of the terminal device, and can avoid network congestion caused when the terminal device accesses a communications network. In addition, when the relay device initiates registration procedures of a plurality of devices by using one registration request message, signaling overheads are greatly reduced and radio resources are saved.

With reference to the second example of the application, in a first implementation of the second example of the application, the registration information includes identification information of the terminal device and/or identification information of a core network node with which the terminal device is registered. In this case, the registration information is used by the relay device to generate a registration request message. Alternatively, the registration information is a registration request message, and the registration request message is used to request to register the terminal device, and may include the identification information of the terminal device. In this case, the registration request message may be used by the relay device to generate a new registration request message, or the registration request message may be directly sent by the relay device to the AN node.

With reference to the second example of the application or the first implementation of the second example of the application, in a second implementation of the second example of the application, when a relay mode corresponding to the relay mode information is a long-term relay mode, the registration request message is used to request to register the relay device and the terminal device. The registration request message can be used to simultaneously register the relay device and the terminal device, thereby reducing signaling load and saving radio resources.

With reference to the second implementation of the second example of the application, in a third implementation of the second example of the application, the registration request message includes identification information of a core network node with which the relay device is registered and/or identification information of the relay device, and may be used by a core network node that receives the registration request message, to obtain subscription information, context information, or the like of the relay device. The registration request message further includes the identification information of the core network node with which the terminal device is registered and/or the identification information of the terminal device, and may be used by the core network node that receives the registration request message, to obtain subscription information, context information, or the like of the terminal device.

With reference to the second or the third implementation of the second example of the application, in a fourth implementation of the second example of the application, the method further includes: sending, by the relay device, the identification information of the relay device and/or the identification information of the core network node with which the relay device is registered, so that the AN node determines the core network node, namely, a target core network node of the relay device, so that the AN node sends the registration request message to the core network node, to complete registration procedures of the terminal device and the relay device.

With reference to any one of the second to the fourth implementations of the second example of the application, in a fifth implementation of the second example of the application, the registration request message includes a registration type and/or relay device indication information, where the relay device indication information is used to indicate the relay device, and may be used by the core network node to page the terminal device. For example, a paging message carries the identification information of the relay device, so that the terminal device can be quickly found through paging. The registration type is used to instruct to register at least two devices, and may be used by the core network node to verify the registration request message. If the verification fails, the core network node sends a registration reject message to the relay device.

With reference to any one of the second to the fifth implementations of the second example of the application, in a sixth implementation of the second example of the application, the method further includes: receiving, by the relay device, a registration accept message, where the registration accept message includes: registration area information of the relay device and registration area information of the terminal device, where a registration area corresponding to the registration area information of the relay device is the same as a registration area corresponding to the registration area information of the terminal device, so that the relay device and the terminal device can simultaneously initiate registration procedures triggered by moving out of the registration areas, to implement simultaneous registration of the relay device and the terminal device by using one registration request message; and/or the registration accept message includes: registration update timer duration of the terminal device and registration update timer duration of the relay device, where the registration update timer duration of the terminal device is the same as the registration update timer duration of the relay device, so that the relay device and the terminal device can simultaneously initiate periodic registration update, to implement simultaneous registration of the relay device and the terminal device by using one registration request message.

With reference to the second example of the application or the first implementation of the second example of the application, in a seventh implementation of the second example of the application, when a relay mode corresponding to the relay mode information is a temporary relay mode, the registration request message is used to request to register the terminal device. The registration request message enables the terminal device to complete registration by using the relay device. In addition, the registration request message may be further used to request to register another terminal device, and the another terminal device also communicates with the AN node by using the relay device. For example, if the relay device receives registration request messages sent by a plurality of terminal devices at the same time or within a preset time period, the relay device may generate a new registration request message based on the received registration request messages, and send the new registration request message to the AN node, thereby further saving radio resources.

With reference to the seventh implementation of the second example of the application, in an eighth implementation of the second example of the application, the method further includes: sending, by the relay device, the identification information of the terminal device and/or the identification information of the core network node with which the terminal device is registered, so that the AN node determines a core network node, that is, a target core network node of the terminal device, so that the AN node sends the registration request message to the core network node, to complete a registration procedure of the terminal device.

According to a third example of the application, that is not covered by the claimed invention, a communications method is provided. The method includes: receiving, by an access network AN node, a registration request message from a relay device; and sending, by the AN node, the registration request message to a core network node corresponding to the relay device. The registration request message may be used to request to register at least two devices (for example, the relay device and a terminal device, or at least two terminal devices). This not only improves registration flexibility of the terminal device, but also reduces signaling overheads and saves radio resources, thereby avoiding network congestion caused when the terminal device accesses a communications network. The terminal device or the at least two terminal devices may communicate with the AN node by using the relay device.

With reference to the third example of the application, in a first implementation of the third example of the application, the registration request message includes identification information of a core network node with which the relay device is registered and/or identification information of the relay device, and may be used by the core network node to obtain subscription information, context information, or the like of the relay device. The registration request message further includes identification information of a core network node with which the terminal device is registered and/or identification information of the terminal device, and may be used by the core network node to obtain subscription information, context information, or the like of the terminal device.

With reference to the third example of the application or the first implementation of the third example of the application, in a second implementation of the third example of the application, the registration request message includes a registration type and/or relay device indication information, where the relay device indication information is used to indicate the relay device, and may be used by the core network node to page the terminal device. For example, a paging message carries the identification information of the relay device, so that the terminal device can be quickly found through paging. The registration type is used to instruct to register at least two devices, and may be used by the core network node to verify the registration request message. If the verification fails, the core network node sends a registration reject message to the relay device.

According to a fourth example of the application, that is not covered by the claimed invention, a communications method is provided. The method includes: receiving, by a core network node, a registration request message from an access network AN node, where the registration request message is used to request to register a relay device and a terminal device; registering, by the core network node, the relay device and the terminal device based on the registration request message; and sending, by the core network node, a registration accept message to the relay device. In the method, not only registration flexibility of the terminal device is improved, but also signaling overheads are reduced and radio resources are saved, thereby avoiding network congestion caused when the terminal device accesses a communications network.

With reference to the fourth example of the application, in a first implementation of the fourth example of the application, the registration request message includes identification information of a core network node with which the relay device is registered and/or identification information of the relay device, and may be used by the core network node to obtain subscription information, context information, or the like of the relay device. The registration request message further includes identification information of a core network node with which the terminal device is registered and/or identification information of the terminal device, and may be used by the core network node to obtain subscription information, context information, or the like of the terminal device.

With reference to the fourth example of the application or the first implementation of the fourth example of the application, in a second implementation of the fourth example of the application, the method further includes: obtaining, by the core network node, the context information of the terminal device from the core network node with which the terminal device is registered; and obtaining, by the core network node, the context information of the relay device from the core network node with which the relay device is registered.

With reference to any one of the fourth example of the application or the implementations of the fourth example of the application, in a third implementation of the fourth example of the application, in an implementation that is not covered by the claimed invention, the registration accept message includes: registration area information of the relay device and registration area information of the terminal device, where a registration area corresponding to the registration area information of the relay device is the same as a registration area corresponding to the registration area information of the terminal device, so that the relay device and the terminal device can simultaneously initiate registration procedures triggered by moving out of the registration areas, to implement simultaneous registration of the relay device and the terminal device by using one registration request message; or the registration accept message includes: registration update timer duration of the terminal device and registration update timer duration of the relay device, where the registration update timer duration of the terminal device is the same as the registration update timer duration of the relay device, so that the relay device and the terminal device can simultaneously initiate periodic registration update, to implement simultaneous registration of the relay device and the terminal device by using one registration request message.

With reference to any one of the fourth example of the application or the implementations of the fourth example of the application, in a fourth implementation of the fourth example of the application, in an implementation that is not covered by the claimed invention, the registration request message further includes a registration type and/or relay device indication information, where the relay device indication information is used to indicate the relay device, and may be used by the core network node to page the terminal device. For example, a paging message carries the identification information of the relay device, so that the terminal device can be quickly found through paging. The registration type is used to instruct to register at least two devices, and may be used by the core network node to verify the registration request message. If the verification fails, the core network node sends a registration reject message to the relay device.

The following fifth to twenty-first described examples are not covered by the claimed invention.

According to a fifth example of the application, a communications apparatus is provided, and includes a unit or a means (means) configured to perform the steps in the method in any one of the first example of the application or the implementations of the first example of the application. The communications apparatus may be a terminal device, for example, remote UE, or may be at least one processing element or chip.

According to a sixth example of the application, a communications apparatus is provided, and includes a unit or a means (means) configured to perform the steps in the method in any one of the second example of the application or the implementations of the second example of the application. The communications apparatus may be a relay device, for example, relay UE, or may be at least one processing element or chip.

According to a seventh example of the application, a communications apparatus is provided, and includes a unit or a means (means) configured to perform the steps in the method in any one of the third example of the application or the implementations of the third example of the application. The communications apparatus may be an AN node, or may be at least one processing element or chip.

According to an eighth example of the application, a communications apparatus is provided, and includes a unit or a means (means) configured to perform the steps in the method in any one of the fourth example of the application or the implementations of the fourth example of the application. The communications apparatus may be a core network node, for example, an AMF, or may be at least one processing element or chip.

According to a ninth example of the application, a communications apparatus is provided, and includes a processor and a memory. The memory is configured to store a program, and the processor invokes the program stored in the memory, to perform the method in any one of the first example of the application or the implementations of the first example of the application. The communications apparatus may be a terminal device, for example, a terminal device that communicates with an AN node by using a relay device, or a terminal device outside a coverage of a wireless network, or may be at least one processing element or chip.

According to a tenth example of the application, a communications apparatus is provided, and includes a processor and a memory. The memory is configured to store a program, and the processor invokes the program stored in the memory, to perform the method in any one of the second example of the application or the implementations of the second example of the application. The communications apparatus may be a relay device, for example, relay UE, or may be at least one processing element or chip.

According to an eleventh example of the application, a communications apparatus is provided, and includes a processor and a memory. The memory is configured to store a program, and the processor invokes the program stored in the memory, to perform the method in any one of the third example of the application or the implementations of the third example of the application. The communications apparatus may be an AN node, for example, a base station, or may be at least one processing element or chip.

According to a twelfth example of the application, a communications apparatus is provided, and includes a processor and a memory. The memory is configured to store a program, and the processor invokes the program stored in the memory, to perform the method in any one of the fourth example of the application or the implementations of the fourth example of the application. The communications apparatus may be a core network node which may have a mobility management function and may be, for example, an AMF node or an MME, or the communications apparatus may be at least one processing element or chip.

According to a thirteenth example of the application, a program is provided. When the program is executed by a processor, the program is used to perform any method according to the first example of the application.

According to a fourteenth example of the application, a computer-readable storage medium is provided. The computer-readable storage medium includes the program according to the thirteenth example of the application.

According to a fifteenth example of the application, a program is provided. When the program is executed by a processor, the program is used to perform any method according to the second example of the application.

According to a sixteenth example of the application, a computer-readable storage medium is provided. The computer-readable storage medium includes the program according to the fifteenth example of the application.

According to a seventeenth example of the application, a program is provided. When the program is executed by a processor, the program is used to perform any method according to the third example of the application.

According to an eighteenth example of the application, a computer-readable storage medium is provided. The computer-readable storage medium includes the program according to the seventeenth example of the application.

According to a nineteenth example of the application, a program is provided. When the program is executed by a processor, the program is used to perform any method according to the fourth example of the application.

According to a twentieth example of the application, a computer-readable storage medium is provided. The computer-readable storage medium includes the program according to the nineteenth example of the application.

According to a twenty-first example of the application, a system is provided. The system includes the communications apparatuses according to the fifth example of the application to the eighth example of the application.

### BRIEF DESCRIPTION OF DRAWINGS

To describe the technical solutions in the embodiments of this application more clearly, the following briefly describes the accompanying drawings required for describing the embodiments. Evidently, the accompanying drawings in the following description show some embodiments of this application, and a person of ordinary skill in the art may still derive other drawings from these accompanying drawings without creative efforts, but without departing from the scope of the invention as defined by the appended claims.

Moreover, only the subject-matter of, and described in relation to, figures 1A, 1B and 2 as well as parts of the subject-matter related to the terminal device in figures 7A and 8A are covered by the claimed invention. The subject-matter of, and described in relation to, the remaining figures and embodiments are not covered by the claimed invention.

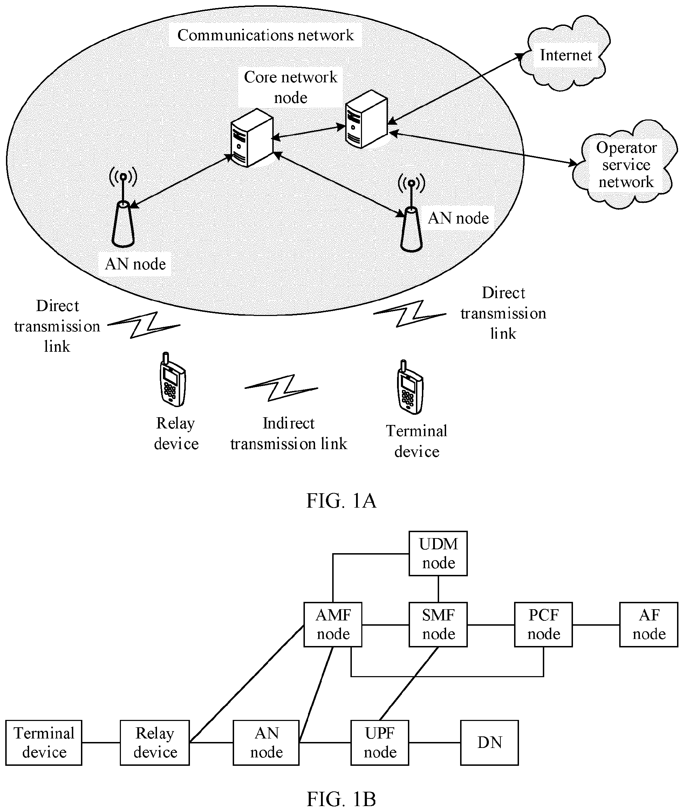

FIG. 1A is a schematic diagram of a communications system;
FIG. 1B is a schematic architectural diagram of a 5G communications system;

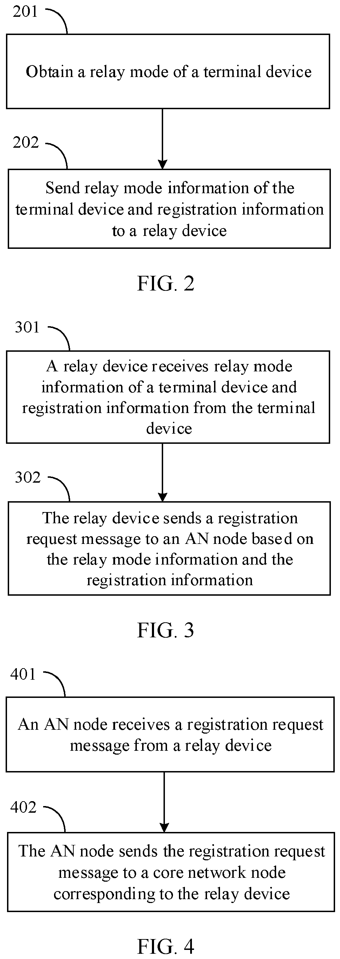

FIG. 2 is a schematic diagram of a communications method according to a first embodiment of this application;
FIG. 3 is a schematic diagram of a communications method according to a second embodiment of this application;
FIG. 4 is a schematic diagram of a communications method according to a third embodiment of this application;

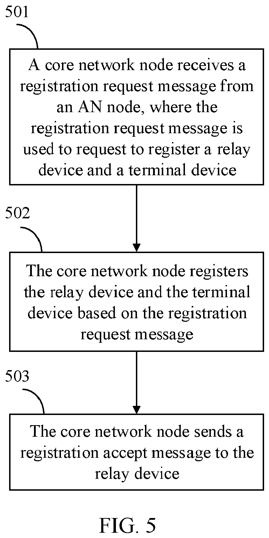

FIG. 5 is a schematic diagram of a communications method according to a fourth embodiment of this application;

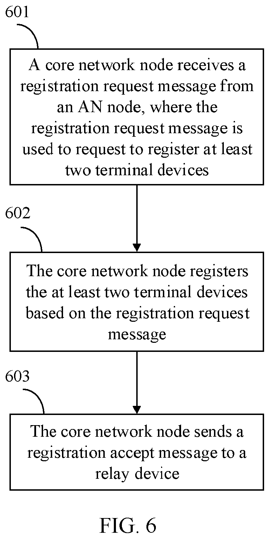

FIG. 6 is a schematic diagram of a communications method according to a fifth embodiment of this application;

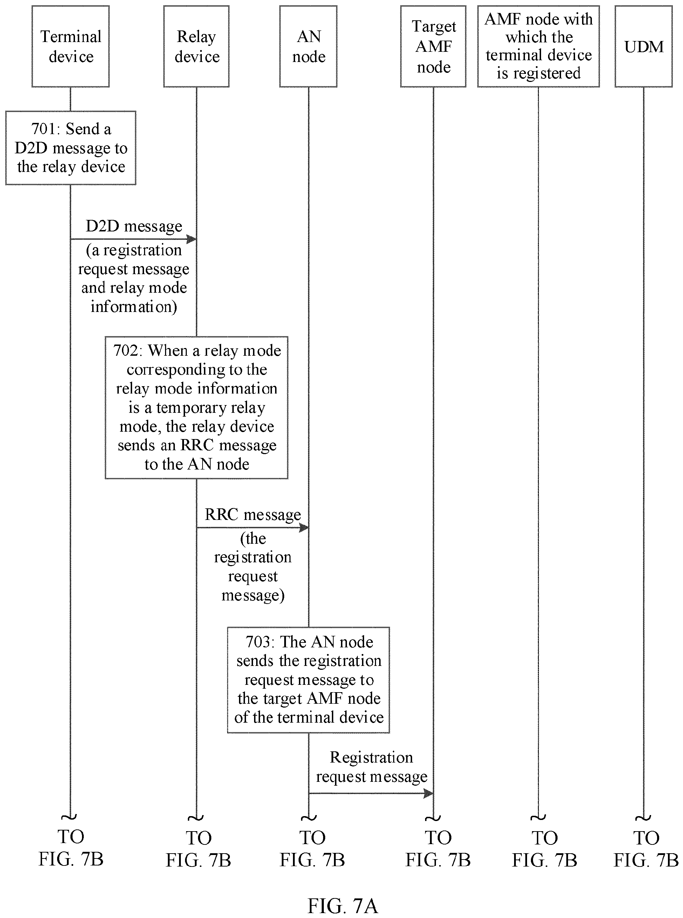

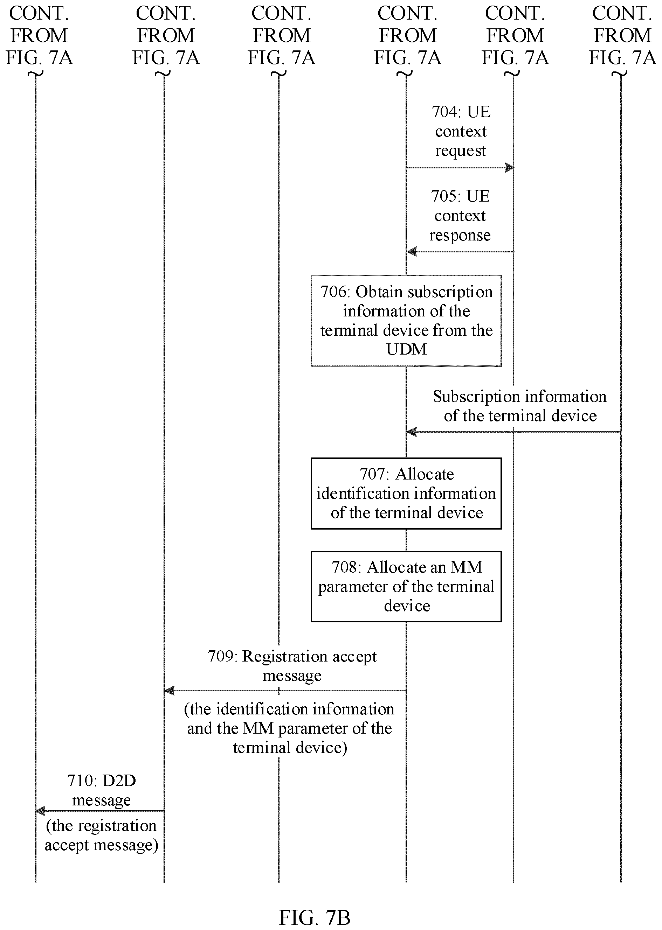

FIG. 7A and FIG. 7B are a schematic diagram of a communications method according to a sixth embodiment of this application;

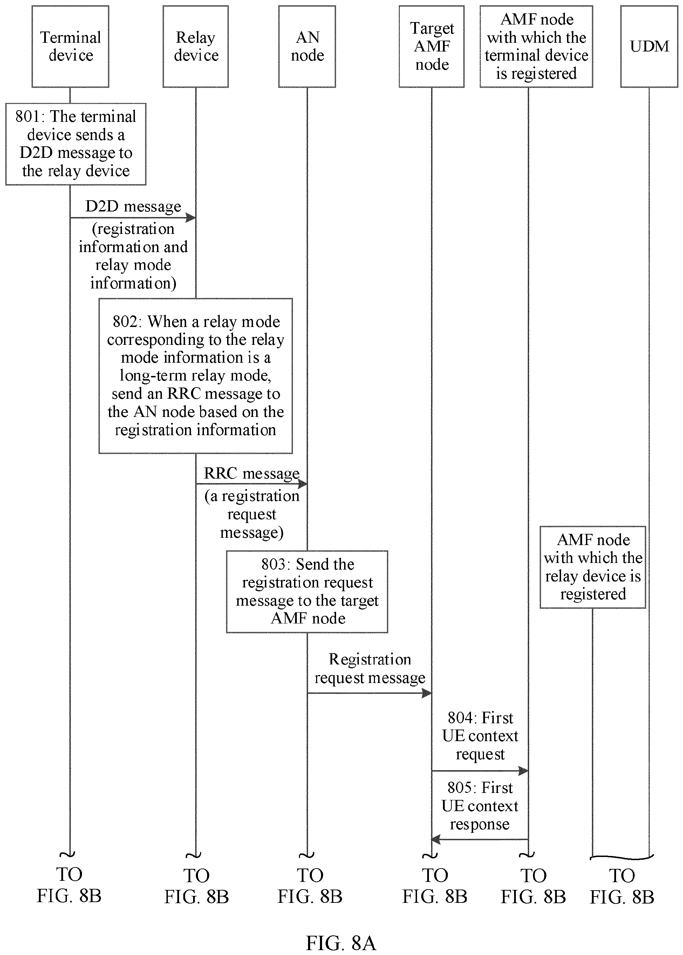

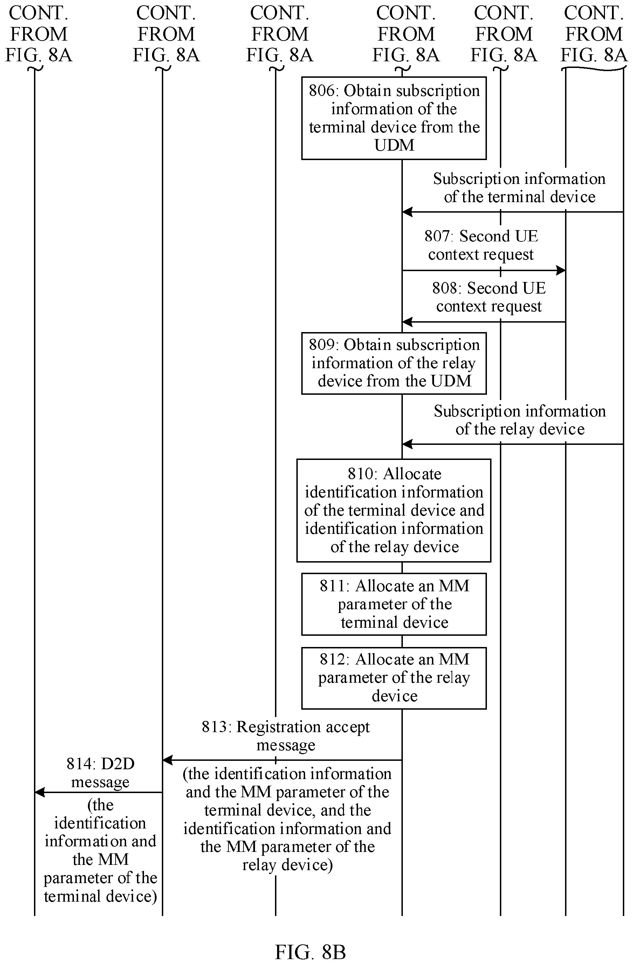

FIG. 8A and FIG. 8B are a schematic diagram of a communications method according to a seventh embodiment of this application;

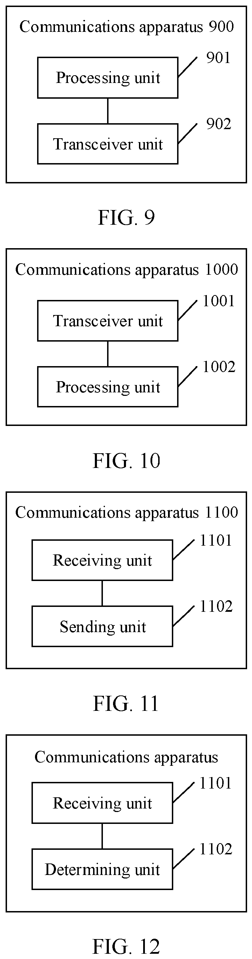

FIG. 9 is a schematic structural diagram of a communications apparatus according to an eighth embodiment of this application;
FIG. 10 is a schematic structural diagram of a communications apparatus according to a ninth embodiment of this application;
FIG. 11 is a schematic structural diagram of a communications apparatus according to a tenth embodiment of this application;
FIG. 12 is a schematic structural diagram of a communications apparatus according to an eleventh embodiment of this application; and

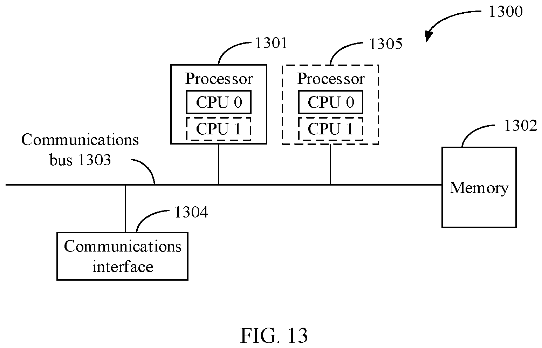

FIG. 13 is a schematic structural diagram of a communications apparatus according to a twelfth embodiment of this application.

### DESCRIPTION OF EMBODIMENTS

The following describes the technical solutions in the embodiments of this application with reference to the accompanying drawings in the embodiments of this application.

The embodiments of this application may be applied to a long term evolution (Long Term Evolution, LTE) network, a universal mobile telecommunications system (Universal Mobile Telecommunications System, UMTS), a global system for mobile communications (Global system for mobile communications, GSM), and a 5th generation (5rd generation, 5G) communications system, a non-3rd generation partnership project (3rd generation partnership project, 3GPP) communications system, or a next generation communications system. This is not limited in the embodiments of this application.

FIG. 1A is a schematic diagram of a communications system. The embodiments of this application may be applied to the communications system. Specifically, the communications system may be a device to device (device to device, D2D) communications system. Certainly, the embodiments of this application may alternatively be applied to a non-D2D communications system.

As shown in FIG. 1A, the communications system includes a network side device, a terminal device, and a relay device. The network side device may include a core network node and an access network (access network, AN) node. The terminal device may communicate with an operator service network or the internet by using the relay device and the network side device.

The following briefly describes devices and some terms in this application with reference to FIG. 1A.

The terminal device may include various handheld devices, vehicle-mounted devices, wearable devices (wired device, WD), or computing devices that have a wireless communication function, or other processing devices connected to a wireless modem, and various forms of terminals, mobile stations (mobile station, MS), terminals (terminal), user equipment (user equipment, UE), soft terminals, and the like. For example, the terminal device is remote (remote) UE or an IoT terminal. In the embodiments of this application, an example in which the terminal device is a wearable device is used for description.

The relay (relay) device may establish a radio resource control (radio resource control, RRC) connection and a non-access stratum (non-access stratum, NAS) connection to a base station, to perform connection management on a radio bearer. For example, the relay device may be a terminal device or a base station that has a relay function. In this application, a device that relays a signal of the terminal device is referred to as a relay device. In this application, an example in which a terminal device associated with the wearable device is the relay device is used for description.

The AN node may be a base station, for example, a base transceiver station (Base Transceiver Station, BTS) in the GSM or a NodeB (NodeB) in the UMTS. In this case, the AN node may communicate with the core network node by using a base station control device. The AN node may alternatively be an evolved NodeB (evolved NodeB, eNB, or e-NodeB) in LTE, a gNB in a 5G system, or the like. Evidently, the AN node may alternatively be a device that has a base station function and that is in a subsequent system. This is not limited.

The core network node may be a serving GPRS support node (serving GPRS support node, SGSN) in the UMTS or the GSM, or may be a mobility management entity (mobility management entity, MME) in an LTE system, or may be an access and mobility management function (Access and Mobility Management Function, AMF) entity in the 5G system, or another device or node having a same or similar function. This is not limited. In this application, the core network node may be a physical entity network element, or may be a virtual network element. This is not limited herein.

A direct transmission link may be a communications link between the terminal device and the network side device (for example, the AN node), for example, a direct link established between the terminal device and the AN node. A relay device is not used to establish a link between the terminal device and the AN node.

An indirect transmission link may be a communications link between the relay device and the terminal device, for example, a relay link.

A method in the embodiments of this application may be applied to a 5G communications system. FIG. 1B is a schematic architectural diagram of a 5G communications system. Components in the network are briefly described below with reference to FIG. 1B.

An access and mobility management function (access and mobility management function, AMF) node is responsible for mobility management, access management, and the like, and may be configured to implement another function in a mobility management entity (mobility management entity, MME) function other than session management.

A session management function (session management function, SMF) node establishes a session for a terminal device, allocates a session identifier (ID), and manages or terminates the session.

A user plane function (User plane function, UPF) node provides functions such as session and bearer management and IP address assignment.

A policy control function (Policy Control Function, PCF) node allocates a security policy to a network entity (for example, an access network node or a UPF node).

A unified device management (unified device management, UDM) node stores subscription information of a user.

A data network (data network, DN) provides an external data network service.

An application function (application function, AF) entity provides an application layer service.

The AMF node, the SMF node, the UPF node, the PCF node, and the UDM node all belong to a core network node.

In this application, a core network node with which a terminal device is registered may be referred to as an old/a source core network node of the terminal device or a core network node with which the terminal device is registered last time. A core network node with which a relay device is registered may be referred to as an old core network node of the relay device, or a core network node with which the relay device is registered last time. This is not limited.

In this application, "a plurality of" means two or more. "And/or" describes an association relationship between associated objects and represents that three relationships may exist. For example, A and/or B may represent the following three cases: Only A exists, both A and B exist, and only B exists. The character "/" generally indicates an "or" relationship between associated objects.

It should be noted that an example mentioned in this application does not represent optimal. The first, the second, and the like mentioned in this application are merely used to distinguish between different information, messages, or other objects, and do not represent a sequence relationship. In addition, mutual reference may be made between the embodiments in this application, and same or similar steps or nouns are not described in detail one by one.

In this application, if the AN node and the core network node are implemented in a service-based manner, a registration request message, a registration accept message, and the like may be replaced with service-based interface information having a same or similar function. This is not limited.

In this application, a sequence of performing steps in each embodiment is not strictly limited, and the steps may be interchanged or adjusted.

FIG. 2 is a schematic diagram of a communications method according to a first embodiment of this application. The method may be performed by a terminal device, and is specifically described as follows.

201: Obtain a relay mode of the terminal device.

The relay mode includes a long-term relay mode or a temporary relay mode.

Specifically, the long-term relay mode may mean that a relay relationship between the terminal device and a relay device continues to be maintained after communication between the terminal device and a network side device by using the relay device ends. The long-term relay mode may alternatively mean that a relay relationship between the terminal device and a relay device continues to be maintained when the terminal device is in an idle state. The long-term relay mode may alternatively mean that the terminal device still camps on an indirect transmission link between the terminal device and a relay device after communication between the terminal device and a network side device by using the relay device ends or when the terminal device is in an idle state. For example, when the relay device is a vehicle-mounted device of a user, and the terminal device is a WD of the user, the long-term relay mode may be used between the relay device and the terminal device.

Specifically, the temporary relay mode may mean that a relay relationship between the terminal device and a relay device ends after communication between the terminal device and a network side device by using the relay device ends. The temporary relay mode may alternatively mean that a relay relationship between the terminal device and a relay device ends when the terminal device is in an idle state. The temporary relay mode may alternatively mean that the terminal device camps on a direct transmission link after communication between the terminal device and a network side device by using a relay device ends or when the terminal device is in an idle state. Further, when the terminal device has to-be-transmitted data or signaling, the terminal device may send the data or signaling to the network side device (for example, an AN node) by using the relay device again. For example, the terminal device may be a WD of a user, and the relay device may be a terminal device of another user. The temporary relay mode may be used between the terminal device and the relay device.

When relay mode information is pre-stored in a memory of the terminal device, step 201 may be specifically: Read the relay mode information of the terminal device from the memory.

In addition, step 201 may alternatively use the following implementation:
Manner 1: Obtain the relay mode of the terminal device based on an idle-state camping manner of the terminal device.

For example, the relay mode is the long-term relay mode if the terminal device camps on the indirect transmission link in the idle state. Specifically, the relay mode is the long-term relay mode if the terminal device camps on the indirect transmission link in the idle state to listen to a message.

For another example, the relay mode is the temporary relay mode if the terminal device camps on the direct transmission link in the idle state. Specifically, the relay mode is the temporary relay mode if the terminal device camps on the direct transmission link in the idle state to listen to a message.

The idle-state camping manner of the terminal device may be configured by using the network side device (for example, an AN node), or may be configured by using a human-machine interaction interface of the terminal device. This is not limited.

Manner 2: Obtain the relay mode of the terminal device based on a preconfigured association relationship.

Specifically, the relay mode of the terminal device is obtained based on whether the terminal device and the relay device belong to a same user. For example, the relay mode is the long-term relay mode when the terminal device and the relay device belong to a same user; or the relay mode is the temporary relay mode when the terminal device and the relay device belong to different users.

The following uses a WD and UE as an example for description.

An association relationship between UE (used as the relay device) and a WD (used as the terminal device) of a same user is preconfigured as the long-term relay mode; and an association relationship between the WD (used as the terminal device) of the user and UE (used as the relay device) of another user is preconfigured as the temporary relay mode.

The association relationship may be preconfigured by using the network side device, or may be preconfigured by using a human-machine interaction interface of the terminal device.

Manner 3: Obtain the relay mode of the terminal device based on a location of the terminal device.

Specifically, the relay mode of the terminal device is the long-term relay mode when the terminal device is located within a preset area range; or the relay mode of the terminal device is the temporary relay mode when the terminal device is located outside a preset area range. For example, the relay mode of the terminal device is the long-term relay mode when the terminal device is located in an office or at home; otherwise, the relay mode of the terminal device is the temporary relay mode.

202: Send the relay mode information of the terminal device and registration information to the relay device.

The relay mode information may be sent to the relay device in an explicit or implicit manner.

An explicit sending manner is used as an example. The terminal device implements the sending by sending at least one bit to the relay device. When the at least one bit is set to a first preset value, it indicates that the relay mode of the terminal device is the long-term relay mode; or when the at least one bit is set to a second preset value, it indicates that the relay mode of the terminal device is the temporary relay mode.

An implicit sending manner is used as an example. The terminal device implements the sending by sending a preset message to the relay device. Specifically, when the terminal device sends the preset message to the relay device, it indicates that the relay mode of the terminal device is the long-term relay mode; or when the terminal device does not send the preset message to the relay device, it indicates that the relay mode of the terminal device is the temporary relay mode.

The registration information may include at least one of the following registration parameters: identification information of the terminal device and identification information of a core network node with which the terminal device is registered. The registration information may alternatively be a registration request message.

Specifically, the identification information of the terminal device is used to identify the terminal device, and may be a permanent identifier, for example, an international mobile subscriber identity (International Mobile Subscriber Identity, IMSI); or may be a temporary identifier, for example, a 5G globally unique temporary UE identity (5G Globally Unique Temporary UE Identity, 5G-GUTI) or a 5G temporary mobile station identity (5G Temporary Mobile Station Identifier, 5G-TMSI).

Specifically, the identification information of the core network node is used to identify the core network node, and may be an identifier that is allocated by an operator to identify the core network node. For example, an identifier of an AMF is a globally unique AMF identifier (Globally Unique AMF Identifier, GUAMI), an IP address, or a name. It should be noted that when some bits in the identification information of the terminal device are the identification information of the core network node with which the terminal device is registered, for example, a 5G-GUTI includes an AMF identifier (GUAMI), the registration information may include only the identification information of the terminal device.

Specifically, when the registration information is a registration parameter, the registration parameter may be carried in a registration request message or another message and sent to the relay device. This is not limited. The registration request message may be sent when the terminal device initiates a registration procedure. The registration procedure may be triggered when the terminal device moves out of a registration area or triggered by periodic registration update.

Optionally, the relay mode information of the terminal device and the registration information are encapsulated in a same message and sent to the relay device. For example, it is assumed that the registration information includes the foregoing registration parameter, the registration request message carries the registration parameter, and the registration request message and the relay mode information are carried in a D2D message. For another example, it is assumed that the registration information is a registration request message, and a D2D message may carry the registration request message and the relay mode information. The relay mode information of the terminal device and the registration information may alternatively be separately sent to the relay device. For example, the relay mode information is first sent to the relay device, and then the registration information is sent. This is not limited.

According to the method provided in this embodiment, the terminal device obtains the relay mode of the terminal device, and sends the relay mode information of the terminal device and the registration information to the relay device, so that the relay device can send the registration request message to the AN node based on the relay mode information of the terminal device and the registration information. This not only improves registration flexibility of the terminal device, but also can avoid network congestion caused when the terminal device accesses a communications network. For example, when the registration request message is used to request to register at least two devices, signaling overheads are reduced and radio resources are saved.

Optionally, before step 201, the method further includes: establishing, by the terminal device, a connection, for example, a relay link, to the relay device.

In an example, when signal coverage of the AN node is poor at the location of the terminal device, the terminal device determines to perform access by using the relay link. Then, the terminal device may select a relay device as the relay device of the terminal device, and establish a connection to the relay device, so that the relay device provides a relay service to the terminal device. In a possible implementation, the connection may be a D2D connection.

That the signal coverage is poor may include: Signal strength of the AN node at the location is less than a preset level threshold, and/or signal quality of the AN node at the location is less than a preset quality threshold.

Optionally, the method further includes: storing, by the terminal device, a relay relationship between the terminal device and the relay device.

The relay relationship may be identification information of the relay device. For example, the terminal device stores the identification information of the relay device, and indicates that the long-term relay mode is used between the terminal device and the relay device.

The relay relationship may alternatively be a correspondence between identification information of the relay device and the identification information of the terminal device.

The relay relationship may alternatively be the relay mode information of the terminal device. For example, the terminal device stores identification information of the relay device and the relay mode information of the terminal device.

When the relay mode of the terminal device is the temporary relay mode, the method may further include: deleting, by the terminal device, the relay relationship. For example, after data transmission on the connection established between the terminal device and the relay device is completed, the relay relationship may be deleted.

Optionally, after step 202, the method further includes: receiving, by the terminal device, registration area information and/or registration update timer duration of the terminal device from the relay device.

A registration area corresponding to the registration area information of the terminal device may be the same as a registration area of the relay device; and the registration update timer duration of the terminal device may be the same as registration update timer duration of the relay device.

Specifically, the registration area information and/or the registration update timer duration of the terminal device may be carried in a registration accept message and sent to the terminal device, or may be carried in another message and sent to the terminal device. This is not limited.

The registration area information may include a cell identifier list, a tracking area (track area, TA) identifier list, or a registration area identifier list. The registration update timer duration may be used to set a registration update timer.

It should be noted that both the registration area and the registration update timer may be used to initiate a registration procedure. For example, when the terminal device moves out of the registration area, or the registration update timer of the terminal device expires, the terminal device may initiate the registration procedure.

FIG. 3 is a schematic diagram of a communications method according to a second embodiment of this application. Details are as follows.

301: A relay device receives relay mode information of a terminal device and registration information from the terminal device.

For the relay mode information and the registration information, refer to related descriptions in step 202. Details are not described again.

The terminal device may communicate with an AN node by using an indirect transmission link between the terminal device and the relay device.

302: The relay device sends a registration request message to the AN node based on the relay mode information and the registration information.

The registration request message may be carried in an RRC message and sent to the AN node.

Correspondingly, after receiving the registration request message in step 302, the AN node may send the registration request message to a core network node.

Step 302 may be performed periodically. Specifically, step 302 is performed periodically by using a registration update period as a period. In other words, step 302 is triggered by a registration update timer. The period may be a registration update period of the relay device, a registration update period of the terminal device, or a period obtained based on a registration update period of the relay device, a registration update period of the terminal device, and a preset method. This is not limited.

In addition, step 302 may alternatively be triggered by step 301. For example, step 302 is performed immediately after the registration information is received. Alternatively, step 302 is performed when the relay device initiates a registration procedure, that is, the terminal device is registered at the same time when the registration procedure of the relay device is performed. This is not limited.

The registration request message may include the following two cases:
Case 1: When a relay mode corresponding to the relay mode information is a long-term relay mode, the registration request message is used to request to register the relay device and the terminal device.

Optionally, in Case 1, step 302 includes: when the relay mode corresponding to the relay mode information is the long-term relay mode, generating, by the relay device, the registration request message based on the registration information of the terminal device, and sending the registration request message to the AN node. For example, the registration request message carries identification information of the terminal device and identification information of the relay device.

In Case 1, the registration request message may include: identification information of a core network node with which the relay device is registered and identification information of a core network node with which the terminal device is registered; identification information of a core network node with which the relay device is registered and the identification information of the terminal device; identification information of a core network node with which the terminal device is registered and the identification information of the relay device; the identification information of the relay device and the identification information of the terminal device; or identification information of a core network node with which the relay device is registered, identification information of a core network node with which the terminal device is registered, the identification information of the relay device, and the identification information of the terminal device.

The identification information of the core network node with which the relay device is registered may be used by the AN node to determine a target core network node of the relay device. For example, when the core network node with which the relay device is registered is available, and a location of the relay device is within a service range of the core network node with which the relay device is registered, the AN node uses, as the target core network node of the relay device, the core network node with which the relay device is registered; otherwise, the AN node may select, as the target core network node of the relay device, a core network node that provides a service to a location of the relay device. Further, the AN node may send the registration request message to the target core network node.

The identification information of the relay device and/or the identification information of the core network node with which the relay device is registered may be included in the registration request message. Certainly, the relay device may alternatively send, to the AN node by using another message, the identification information of the relay device and/or the identification information of the core network node with which the relay device is registered. This is not limited herein.

Specifically, the relay device may add, to an RRC message, the identification information of the relay device and the identification information of the core network node with which the relay device is registered. To be specific, the identification information of the relay device, the identification information of the core network node with which the relay device is registered, and the registration request message are added to a same RRC and sent to the AN node.

Alternatively, the RRC message may not include the identification information of the core network node with which the relay device is registered, but carries only the identification information of the relay device (for example, a permanent identifier or a 5G-GUTI of the relay device). In this case, the AN node may obtain the location of the relay device based on the identifier of the relay device, and further select the target core network node for the relay device based on the location of the relay device. How to select the target core network node belongs to the prior art. Details are not described.

Optionally, in Case 1, the registration request message includes a registration type and/or relay device indication information. The registration type may be used to indicate that the registration request message is used to request to register the relay device and the terminal device, or register at least two devices. The relay device indication information may be used to indicate which device in a plurality of devices is the relay device.

In a possible implementation, the registration request message includes the relay device indication information, and this is an explicit indication manner. For example, the registration request message includes an identifier of the terminal device, an identifier of the relay device, and the relay device indication information. When the relay device indication information is set to a preset value (for example, 1), it indicates that a device corresponding to an identifier located in the front of the message is the relay device. For another example, the relay device indication information may be an identifier of the relay device.

In another possible implementation, the relay device may be indicated in an implicit manner. For example, the relay device is identified by using storage locations, of an identifier of the terminal device and an identifier of the relay device, in the registration request message. For example, the identifier of the relay device may be stored at a location in the front of the registration request message (closer to a message header of the registration request message).

In Case 1, registration operations on the relay device and the terminal device are simultaneously implemented by using the registration request message, and there is no need to separately perform the registration operations on the relay device and the terminal device. This further reduces signaling overheads caused by a registration procedure, and greatly saves radio resources.

Case 2: When a relay mode corresponding to the relay mode information is a temporary relay mode, the registration request message is used to request to register the terminal device.

In this case, the registration request message is used only to request to register the terminal device, or the registration request message is used only to request to register at least one terminal device.

Specifically, when the relay mode corresponding to the relay mode information is the temporary relay mode, and the registration information is a registration request message, the relay device sends, to the AN node, the registration request message received from the terminal device, or the relay device sends a second registration request message to the AN node based on a first registration request message sent by the terminal device.

For example, it is assumed that the registration information is a registration message, both a terminal device 1 and a terminal device 2 communicate with the AN node by using the relay device, a relay mode between the terminal device 1 and the relay device is the temporary relay mode, and a relay mode between the terminal device 2 and the relay device is the temporary relay mode. After the relay device receives a first registration request message of the terminal device 1 and a second registration request message sent by the terminal device 2, the relay device generates a third registration request message based on the first registration request message and the second registration request message. Specifically, the third registration request message may carry identification information of the terminal device 1 and identification information of the terminal device 2, or identification information of a core network node with which the terminal device 1 is registered and identification information of a core network node with which the terminal device 2 is registered. This is not limited.

Specifically, when the relay mode corresponding to the relay mode information is the temporary relay mode, and the registration information is not a registration request message, the relay device generates the registration request message based on the registration information.

For example, it is assumed that the registration information is a registration parameter, both a terminal device 1 and a terminal device 2 communicate with the AN node by using the relay device, a relay mode between the terminal device 1 and the relay device is the temporary relay mode, and a relay mode between the terminal device 2 and the relay device is the temporary relay mode. After the relay device receives registration information sent by the terminal device 1 and registration information sent by the terminal device 2, the relay device generates the registration request message based on the registration information sent by the terminal device 1 and the registration information sent by the terminal device 2. Specifically, the registration request message may carry the registration information sent by the terminal device 1 and the registration information sent by the terminal device 2. To be specific, the registration request message is used to request to register the terminal device 1 and the terminal device 2, thereby avoiding a problem such as high signaling overheads caused when each terminal device independently performs a registration procedure.

Optionally, the relay device may further send, to the AN node, identification information of the terminal device and/or identification information of a core network node with which the terminal device is registered.

For example, the identification information of the terminal device and/or the identification information of the core network node with which the terminal device is registered may be obtained by the relay device by parsing the registration request message sent by the terminal device.

The identification information of the core network node with which the terminal device is registered may be used by the AN node to determine a target core network node of the terminal device. For example, when the core network node with which the terminal device is registered is available, and the terminal device is located within a service range of the core network node with which the terminal device is registered, the AN node sends the registration request message to the core network node with which the terminal device is registered; otherwise, the AN node selects, as the target core network node of the terminal device, a core network node that provides a service to a location of the terminal device. Further, the AN node may send the registration request message to the target core network node.

The identification information of the terminal device may be used by the AN node to obtain the location of the terminal device, and determine the target core network node for the terminal device based on the location of the terminal device. How to select the target core network node belongs to the prior art. Details are not described.

Optionally, the relay device adds, to a same RRC message, the identification information of the terminal device and/or the identification information of the core network node with which the terminal device is registered, and sends the RRC message to the AN node. Alternatively, the relay device adds, to a same RRC, the identification information of the terminal device and/or the identification information of the core network node with which the terminal device is registered, and the registration request message, and sends the same RRC message to the AN node.

In Case 2, at least one terminal device can complete a registration procedure of the terminal device by using the relay device. This not only avoids a registration failure problem caused by poor network signal coverage, but also reduces signaling load when a plurality of terminal devices are registered by using one relay device, thereby saving radio resources and power of the terminal device.

According to the method provided in this embodiment, the relay device receives the relay mode information of the terminal device and the registration information from the terminal device, and sends the registration request message to the AN node based on the relay mode information and the registration information. The relay device can initiate a registration procedure of one or more devices (for example, the relay device and the terminal device, or at least two terminal devices) by using the registration request message. This not only improves registration flexibility of the terminal device, but also can avoid network congestion caused when the terminal device accesses a communications network. For example, when the registration request message is used to request to register at least two devices, signaling overheads are reduced and radio resources are saved.

Optionally, after step 302, the method further includes: receiving, by the relay device, a registration accept message.

The registration accept message may include:
registration area information of the relay device and registration area information of the terminal device, where a registration area corresponding to the registration area information of the relay device may be the same as a registration area corresponding to the registration area information of the terminal device; and/or
registration update timer duration of the terminal device and registration update timer duration of the relay device, where the registration update timer duration of the terminal device may be the same as the registration update timer duration of the relay device.

Further, the method may further include: sending, by the relay device, the registration area information and/or the registration update timer duration of the terminal device to the terminal device.

Specifically, the relay device may directly send the registration accept message to the terminal device, or add the registration area information and/or the registration update timer duration of the terminal device to another message and send the another message to the terminal device. This is not limited.

For the registration area, the registration area information, the registration update timer duration, and the like, refer to related descriptions in the embodiment shown in FIG. 2. Details are not described again.

FIG. 4 is a schematic diagram of a communications method according to a third embodiment of this application. Details are as follows.

401: An AN node receives a registration request message from a relay device.

The registration request message may be used to request to register the relay device and a terminal device. The terminal device may communicate with the AN node by using the relay device. A long-term relay mode may be used between the relay device and the terminal device. Refer to related descriptions in FIG. 2. Details are not described again.

The registration request message may alternatively be used to request to register at least two terminal devices. The at least two terminal devices may communicate with the AN node by using the relay device. A temporary relay mode may be used between the relay device and the at least two terminal devices. Refer to related descriptions in FIG. 2. Details are not described again.

Content of the registration request message is described below with respect to two different cases of the registration request message.

Case 1: The registration request message is used to request to register the relay device and the terminal device.

The registration request message may include identification information of a core network node with which the relay device is registered and/or identification information of the relay device; and the registration request message may further include identification information of a core network node with which the terminal device is registered and/or identification information of the terminal device.

Optionally, the registration request message includes a registration type and/or relay device indication information. The relay device indication information is used to indicate the relay device. Refer to related descriptions in the embodiment shown in FIG. 3. The registration type is used to instruct to register at least two devices. For example, the registration type is specifically used to instruct to register the relay device and the terminal device.

Case 2: The registration request message is used to request to register at least two terminal devices.

The registration request message may include identification information of core network nodes with which the at least two terminal devices are registered and/or identification information of the at least two terminal devices; or the registration request message may include identification information of core network nodes with which some of the at least two terminal devices are registered, and identification information of a remaining device in the at least two terminal devices.

Optionally, the registration request message includes a registration type. The registration type is used to instruct to register at least two devices. For example, the registration type is specifically used to instruct to register the at least two terminal devices.

402: The AN node sends the registration request message to a core network node.

In Case 1 in step 401, the core network node may be a core network node corresponding to the relay device.

Specifically, the AN node may receive, from the relay device, the identification information of the relay device and/or the identification information of the core network node with which the relay device is registered, or may obtain, through parsing the registration request message, the identification information of the relay device and/or the identification information of the core network node with which the relay device is registered; and then determine, based on the identification information of the relay device and/or the identification information of the core network node with which the relay device is registered, the core network node corresponding to the relay device. Refer to related descriptions in the embodiment shown in FIG. 3. Details are not described again.

In Case 2 in step 401, the core network node may be a core network node corresponding to any one of the at least two terminal devices. Refer to related descriptions in the embodiment shown in FIG. 3. Details are not described again.

Specifically, the AN node may receive, from the relay device, the identification information of the terminal device and/or the identification information of the core network node with which the terminal device is registered, or may obtain, through parsing the registration request message, the identification information of the terminal device and/or the identification information of the core network node with which the terminal device is registered; and then determine, based on the identification information of the terminal device and/or the identification information of the core network node with which the terminal device is registered, the core network node corresponding to the terminal device. Refer to related descriptions in the embodiment shown in FIG. 3. Details are not described again.

According to the method provided in this embodiment, the AN node receives the registration request message from the relay device, where the registration request message is used to request to register a plurality of devices (for example, the relay device and the terminal device, or at least two terminal devices); and the AN node sends the registration request message to the core network node. This not only improves registration flexibility of the terminal device, but also can avoid network congestion caused when the terminal device accesses a communications network. For example, when the registration request message is used to request to register at least two devices, signaling overheads are reduced and radio resources are saved.

FIG. 5 is a schematic diagram of a communications method according to a fourth embodiment of this application. Details are as follows.

501: A core network node receives a registration request message from an AN node.

The registration request message is used to request to register a relay device and a terminal device. The terminal device may communicate with the AN node by using the relay device. A long-term relay mode may be used between the relay device and the terminal device. Refer to related descriptions in FIG. 2. Details are not described again.

The registration request message may carry a registration type and/or relay indication information, and the relay indication information may be used by the core network node to add identification information of both the terminal device and the relay device to a paging message, to more accurately page the terminal device. For details, refer to related descriptions in the embodiment shown in FIG. 3. Details are not described again.

For the core network node, refer to related descriptions of the target core network node of the relay device in the embodiment shown in FIG. 3. Details are not described again.

502: The core network node registers the relay device and the terminal device based on the registration request message.

Specifically, when the registration request message includes the registration type, step 502 may include: verifying, by the core network node, the registration request message based on the registration type; and when the registration request message fails to be verified, sending, by the core network node, a registration reject message to the relay device; or when the registration request message is successfully verified, performing step 503.

In an example, when the registration type indicates that the registration request message is used to request to register the terminal device and the relay device, if the registration request message carries identification information of a core network node with which the relay device is registered and/or the identification information of the relay device, and the registration request message further carries identification information of a core network node with which the terminal device is registered and/or the identification information of the terminal device, the registration request message is successfully verified; otherwise, the registration request fails to be verified.

In another example, when the registration type indicates that the registration request message is used to request to register one device, if the registration request message carries the identification information of the relay device and the identification information of the terminal device, the registration request message fails to be verified.

503: The core network node sends a registration accept message to the relay device.

The registration accept message may include:
registration area information of the relay device and registration area information of the terminal device, where a registration area corresponding to the registration area information of the relay device may be the same as a registration area corresponding to the registration area information of the terminal device; or
registration update timer duration of the terminal device and registration update timer duration of the relay device, where the registration update timer duration of the terminal device may be the same as the registration update timer duration of the relay device.

For the registration area information, the registration area, the registration update timer duration, and the like, refer to related descriptions in the embodiment shown in FIG. 2 or FIG. 3. Details are not described again.

It should be noted that when the core network node is different from the core network node with which the terminal device is registered, the core network node may further obtain context information of the terminal device from the core network node with which the terminal device is registered.

Specifically, the core network node sends an information request (information request) message to the core network node with which the terminal device is registered, where the information request message carries an identifier of the terminal device. Correspondingly, the core network node with which the terminal device is registered sends an information response (information response) message to the target core network node, where the information response message carries the context information of the terminal device. The target core network node receives the information response message, to obtain the context information of the terminal device.

The context information may be a UE context in the prior art, or may be some information in the UE context. This is not limited.

When the core network node is different from the core network node with which the relay device is registered, the core network node may further obtain context information of the relay device from the core network node with which the relay device is registered. Specifically, the core network node may obtain the context information of the relay device in the foregoing manner of obtaining the context information of the terminal device. Details are not described again.

According to the method provided in this embodiment, the core network node receives the registration request message from the AN node, where the registration request message is used to request to register the relay device and the terminal device; and the core network node registers the relay device and the terminal device based on the registration request message. This not only improves registration flexibility of the terminal device, but also can avoid network congestion caused when the terminal device accesses a communications network. For example, when the registration request message is used to request to register at least two devices, signaling overheads are reduced and radio resources are saved.

FIG. 6 is a schematic diagram of a communications method according to a fifth embodiment of this application. Details are as follows.

601: A core network node receives a registration request message from an AN node.

The registration request message is used to request to register at least two terminal devices. The registration request message may carry a registration type. Refer to related descriptions in the embodiment shown in FIG. 3. Details are not described again.

For the core network node, refer to related descriptions of the target core network node of the terminal device in the embodiment shown in FIG. 3. Details are not described again.

602: The core network node registers the at least two terminal devices based on the registration request message.

Specifically, when the registration request message includes the registration type, step 602 may include: verifying, by the core network node, the registration request message based on the registration type; and when the registration request message fails to be verified, sending, by the core network node, a registration reject message to a relay device; or when the registration request message is successfully verified, performing step 603. Implementation of step 603 is similar to that of step 502. Details are not described again.

603: The core network node sends a registration accept message to the relay device.

The at least two terminal devices may communicate with the AN node by using the relay device. A temporary relay mode may be used between the at least two terminal devices and the relay device. Refer to related descriptions in FIG. 2. Details are not described again.

The registration accept message may include:
registration area information of the at least two terminal devices, where registration areas corresponding to the registration area information of the at least two terminal devices may be the same; or
registration update timer duration of the at least two terminal devices, where the registration update timer duration of the at least two terminal devices may be the same.

For the registration area information, the registration area, the registration update timer duration, and the like, refer to related descriptions in the embodiment shown in FIG. 2 or FIG. 3. Details are not described again.

Further, after receiving the registration accept message, the relay device may separately send the registration accept message to the at least two terminal devices, or may send some content carried in the registration accept message to the terminal devices. This is not limited.

It should be noted that when the core network node is different from a core network node with which any one of the at least two terminal devices is registered, the core network node may further obtain context information of the terminal device from the core network node with which the terminal device is registered. For the context information, refer to related descriptions in the embodiment shown in FIG. 5. Details are not described again.

According to the method provided in this embodiment, the core network node receives the registration request message from the AN node, where the registration request message is used to request to register the at least two terminal devices; and the core network node registers the at least two terminal devices based on the registration request message. This not only improves registration flexibility of the terminal device, but also can avoid network congestion caused when the terminal device accesses a communications network. For example, when the registration request message is used to request to register at least two devices, signaling overheads are reduced and radio resources are saved.

FIG. 7A and FIG. 7B are a schematic flowchart of a communications method according to a sixth embodiment of this application. A 5G system is used as an example in the method. Details are as follows.

701: A terminal device sends a D2D message to a relay device.

The D2D message carries a registration request message and relay mode information, and may further carry identification information of an AMF node with which the terminal device is registered.

The registration request message is used to request to register the terminal device, and the registration request message may carry identification information of the terminal device.

702: When a relay mode corresponding to the relay mode information is a temporary relay mode, the relay device sends an RRC message to an AN node.

The RRC message carries the registration request message, and may further carry the identification information of the AMF node with which the terminal device is registered.

703: The AN node sends the registration request message to a target AMF node of the terminal device.

The target AMF node may be determined by the AN node based on the identification information of the terminal device or the identification information of the AMF node with which the terminal device is registered. For details, refer to related descriptions of the target core network node of the terminal device in the embodiment shown in FIG. 3. Details are not described again.

When the target AMF node of the terminal device is the AMF node with which the terminal device is registered, steps 704 to 706 may not be performed.

704: The target AMF node sends a UE context request to the AMF node with which the terminal device is registered.

705: The AMF node with which the terminal device is registered sends a UE context response to the target AMF node.

The UE context response carries context information of the terminal device. For the context information, refer to related descriptions in the embodiment shown in FIG. 5. Details are not described again.

706: The target AMF node obtains subscription information of the terminal device from UDM.

The subscription information belongs to the prior art. Details are not described.

707: The target AMF node allocates identification information of the terminal device.

The identification information may be a temporary identifier of the terminal device, for example, a 5G-GUTI or a 5G-TMSI. Refer to related descriptions in the embodiment shown in FIG. 2. Details are not described again.

708: The target AMF node allocates a mobility management (mobility management, MM) parameter of the terminal device.

The MM parameter may include a registration area and/or registration update timer duration.

It should be noted that, both step 707 and step 708 are optional steps. For example, when the target AMF node of the terminal device is not the AMF node with which the terminal device is registered, steps 707 and 708 may be performed. For another example, when the target AMF node of the terminal device is the AMF node with which the terminal device is registered, if an expiration time of the temporary identifier of the terminal device is reached, step 707 may be performed; or if an expiration time of the registration area is reached, step 708 may be performed, to allocate the registration area of the terminal device.

709: The target AMF node sends a registration accept message to the relay device.

The registration accept message may carry the identification information allocated in step 707 or the MM parameter allocated in step 708.

710: The relay device sends a D2D message to the terminal device.

The D2D message carries the registration accept message.

It should be noted that an execution sequence of steps 704 to 708 may be interchanged. This is not limited. In addition, for the relay mode information, the relay mode, the temporary relay mode, the identification information, and the like, refer to the foregoing method embodiments. Details are not described again.

According to the method provided in this embodiment, the terminal device sends the relay mode information of the terminal device and the registration request message to the relay device. When the relay mode corresponding to the relay mode information is the temporary relay mode, the relay device sends the registration request message to the AN node, and then the AN node sends the registration request message to the target AMF node. In the method, the relay device sends the registration request message based on the relay mode of the terminal device. This not only improves registration flexibility of the terminal device, but also can avoid network congestion caused when the terminal device accesses a communications network. For example, when a plurality of terminal devices are registered by using one relay device, signaling load can be further reduced.

FIG. 8A and FIG. 8B are a schematic flowchart of a communications method according to a seventh embodiment of this application. A 5G system is used as an example in the method. Details are as follows.

801: A terminal device sends a D2D message to a relay device.

The D2D message carries registration information and relay mode information.

802: When a relay mode corresponding to the relay mode information is a long-term relay mode, the relay device sends an RRC message to an AN node based on the registration information.

The RRC message carries a registration request message, and may further carry identification information of an AMF node with which the relay device is registered.

The registration request message is used to request to register the terminal device and the relay device, and the registration request message may carry identification information of the terminal device and identification information of the relay device.

803: The AN node sends the registration request message to a target AMF node.

The target AMF node may be determined by the AN node based on the identification information of the relay device or the identification information of the AMF node with which the relay device is registered. For details, refer to related descriptions of the target core network node of the relay device in the embodiment shown in FIG. 3. Details are not described again.

When the target AMF node is an AMF node with which the terminal device is registered, steps 804 to 806 may not be performed.

When the target AMF node is the AMF node with which the relay device is registered, steps 807 to 809 may not be performed.

804: The target AMF node sends a first UE context request to the AMF node with which the terminal device is registered.

805: The AMF node with which the terminal device is registered sends a first UE context response to the target AMF node.

The first UE context response carries context information of the terminal device.

806: The target AMF node obtains subscription information of the terminal device from UDM.

807: The target AMF node sends a second UE context request to the AMF node with which the relay device is registered.

808: The AMF node with which the relay device is registered sends a second UE context response to the target AMF node.

The second UE context response carries context information of the relay device.

809: The target AMF node obtains subscription information of the relay device from the UDM.

It should be noted that when the target AMF node is neither the AMF node with which the terminal device is registered nor the AMF node with which the relay device is registered, steps 806 and 809 may be simultaneously performed. To be specific, the target AMF node obtains the subscription information of the relay device and the subscription information of the terminal device from the UDM by using a same message or same service-based interface information.

810: The target AMF node allocates identification information of the terminal device and identification information of the relay device.

The identification information of the terminal device may be a temporary identifier of the terminal device, and the identification information of the relay device may be a temporary identifier of the relay device. Refer to related descriptions in the embodiment shown in FIG. 2. Details are not described again.

811: The target AMF node allocates an MM parameter of the terminal device.

The MM parameter may include a registration area and/or registration update timer duration.

812: The target AMF node allocates an MM parameter of the relay device.

The MM parameter of the terminal device may be the same as the MM parameter of the relay device. For example, a registration area of the relay device may be the same as a registration area of the terminal device; and registration update timer duration of the terminal device may be the same as registration update timer duration of the relay device.

It should be noted that steps 810 to 812 are all optional steps. For example, when the target AMF node of the terminal device is not the AMF node with which the terminal device is registered, step 811 and the allocating the identification information of the terminal device in step 810 are performed. When the target AMF node of the relay device is not the AMF node with which the relay device is registered, step 812 and the allocating the identification information of the relay device in step 810 are performed.

For another example, when the target AMF node of the terminal device is the AMF node with which the terminal device is registered, if an expiration time of the temporary identifier of the terminal device is reached, the allocating the identification information of the terminal device in step 810 is performed; or if an expiration time of the registration area is reached, step 811 is performed, to allocate the registration area of the terminal device.

In addition, steps 811 and 812 may be simultaneously performed, that is, a same MM parameter is allocated to the terminal device and the relay device.

813: The target AMF node sends a registration accept message to the relay device.

The registration accept message may carry the identification information, of the terminal device, allocated in step 810 or the MM parameter, of the terminal device, allocated in step 811; and may further carry the identification information, of the relay device, allocated in step 810 and the MM parameter, of the relay device, allocated in step 812.

814: The relay device sends a D2D message to the terminal device.

The D2D message may include related information, of the terminal device, carried in the registration accept message, for example, the identification information of the terminal device or the MM parameter of the terminal device; or may include the registration accept message.

It should be noted that an execution sequence of steps 804 to 812 may be interchanged. This is not limited.

In addition, for the registration information, the relay mode information, the long-term relay mode, the registration area, the registration update timer duration, the identification information, and the like, refer to the foregoing method embodiments. Details are not described again.

According to the method provided in this embodiment, the terminal device sends the relay mode information of the terminal device and the registration information to the relay device. When the relay mode corresponding to the relay mode information is the long-term relay mode, the relay device sends the registration request message to the AN node, where the registration request message is used to request to register the terminal device and the relay device, and then the AN node sends the registration request message to the target AMF node. This not only improves registration flexibility of the terminal device, but also can avoid network congestion caused when the terminal device accesses a communications network. For example, one registration request is used to initiate registration procedures of the terminal device and the relay device, thereby reducing signaling overheads and saving radio resources.

FIG. 9 is a schematic diagram of a communications apparatus 900 according to an eighth embodiment of this application. The communications apparatus 900 may be configured to perform the steps of the terminal device in the foregoing method embodiments. The communications apparatus 900 may be a terminal device, or a chip or a system on chip in a terminal device. The communications apparatus 900 includes a processing unit 901 and a transceiver unit 902.

The processing unit 901 is configured to obtain a relay mode of the terminal device.

The transceiver unit 902 is configured to send relay mode information of the terminal device and registration information to a relay device.

The registration information includes identification information of the terminal device and/or identification information of a core network node with which the terminal device is registered; or the registration information is a registration request message.

The processing unit 901 is further configured to:
obtain the relay mode of the terminal device based on an idle-state camping manner of the terminal device. In other examples not covered by the claimed invention, the unit 901 is configured to:
obtain the relay mode of the terminal device based on a preconfigured association relationship; or
obtain the relay mode of the terminal device based on a location of the terminal device.

The processing unit 901 is further configured to obtain that:
the relay mode of the terminal device is a long-term relay mode if the terminal device camps on an indirect transmission link when the terminal device is in an idle state; or
the relay mode of the terminal device is a temporary relay mode if the terminal device camps on a direct transmission link when the terminal device is in an idle state.

Optionally, the processing unit 901 is further configured to:
the relay mode of the terminal device is a long-term relay mode when the terminal device is located within a preset area range; or
the relay mode of the terminal device is a temporary relay mode when the terminal device is located outside a preset area range.

Optionally, the transceiver unit 902 is further configured to:
receive registration area information and/or registration update timer duration of the terminal device from the relay device, where
a registration area corresponding to the registration area information of the terminal device may be the same as a registration area of the relay device; and the registration update timer duration of the terminal device may be the same as registration update timer duration of the relay device.

It should be noted that the foregoing units may be implemented in a form of hardware. For example, the processing unit 901 may be at least one processor, and the transceiver unit 902 may be a transceiver or a communications interface. Alternatively, the foregoing units may be implemented in a form of software functional modules.

The apparatus provided in this embodiment obtains the relay mode of the terminal device, and sends the relay mode information of the terminal device and the registration information to the relay device, so that the relay device can send a registration request message to an AN node based on the relay mode information of the terminal device and the registration information. This not only improves registration flexibility of the terminal device, but also can avoid network congestion caused when the terminal device accesses a communications network.

FIG. 10 is a schematic diagram of a communications apparatus 1000 according to a ninth embodiment of this application. The communications apparatus 1000 may be configured to perform the steps of the relay device in the foregoing method embodiments. The communications apparatus 1000 may be a relay device, or a chip or a system on chip in a relay device. Specifically, the communications apparatus 1000 includes a transceiver unit 1001 and a processing unit 1002.

The transceiver unit 1001 is configured to receive relay mode information of a terminal device and registration information from the terminal device.

The processing unit 1002 is configured to send a registration request message to an access network AN node based on the relay mode information and the registration information.

Optionally, the registration information includes identification information of the terminal device and/or identification information of a core network node with which the terminal device is registered; or the registration information is a registration request message.

Optionally, when a relay mode corresponding to the relay mode information is a long-term relay mode, the registration request message is used to request to register the relay device and the terminal device.

Further, optionally, the registration request message includes identification information of a core network node with which the relay device is registered and/or identification information of the relay device; and the registration request message further includes identification information of a core network node with which the terminal device is registered and/or identification information of the terminal device.

Further, optionally, the transceiver unit 1001 is further configured to send, to the AN node, the identification information of the relay device and/or the identification information of the core network node with which the relay device is registered.

Further, optionally, the registration request message includes a registration type and/or relay device indication information, where
the relay device indication information is used to indicate the relay device; and the registration type is used to instruct to register at least two devices.

Further, optionally, the transceiver unit 1001 is further configured to:
receive a registration accept message, where the registration accept message includes:
registration area information of the relay device and registration area information of the terminal device, where a registration area corresponding to the registration area information of the relay device is the same as a registration area corresponding to the registration area information of the terminal device; and/or
registration update timer duration of the terminal device and registration update timer duration of the relay device, where the registration update timer duration of the terminal device is the same as the registration update timer duration of the relay device.

Optionally, when a relay mode corresponding to the relay mode information is a temporary relay mode, the registration request message is used to request to register the terminal device.

Further, optionally, the transceiver unit 1001 is further configured to send, to the AN node, the identification information of the terminal device and/or the identification information of the core network node with which the terminal device is registered.

It should be noted that the foregoing units may be implemented in a form of hardware. For example, the processing unit 1002 may be at least one processor, and the transceiver unit 1001 may be a transceiver or a communications interface. Alternatively, the foregoing units may be implemented in a form of software functional modules.

The apparatus provided in this embodiment receives the relay mode information of the terminal device and the registration information from the terminal device, and sends the registration request message to the AN node based on the relay mode information and the registration information. The registration request message may be used to request register one or more devices (for example, the relay device and the terminal device, or at least two terminal devices). This not only improves registration flexibility of the terminal device, but also can avoid network congestion caused when the terminal device accesses a communications network. For example, when the registration request message is used to request to register at least two devices, signaling overheads are reduced and radio resources are saved.

FIG. 11 is a schematic diagram of a communications apparatus 1100 according to a tenth embodiment of this application. The communications apparatus 1100 may be configured to perform the steps of the AN node in the foregoing method embodiments. The communications apparatus 1100 may be AN node, or a chip or a system on chip in an AN node. Specifically, the communications apparatus 1100 includes a receiving unit 1101 and a sending unit 1102.

The receiving unit 1101 is configured to receive a registration request message from a relay device, where the registration request message is used to request to register at least two devices.

The at least two devices may include the relay device and a terminal device, and the terminal device may communicate with the AN node by using the relay device. The at least two devices may alternatively be at least two terminal devices, and the at least two terminal devices communicate with the AN node by using one relay device. A temporary relay mode may be used between the relay device and the at least two terminal devices. Refer to related descriptions in FIG. 2. Details are not described again.

The sending unit 1102 is configured to send the registration request message to a core network node corresponding to the relay device.

Optionally, the registration request message includes identification information of a core network node with which the relay device is registered and/or identification information of the relay device; and further includes identification information of a core network node with which the terminal device is registered and/or identification information of the terminal device.

Optionally, the registration request message includes a registration type and/or relay device indication information. The relay device indication information is used to indicate the relay device; and the registration type is used to instruct to register at least two devices.

It should be noted that the foregoing units may be implemented in a form of hardware. For example, the receiving unit 1101 may be a transceiver, and the sending unit 1102 may be a communications interface. Alternatively, the foregoing units may be implemented in a form of software functional modules.

The apparatus provided in this embodiment receives the registration request message from the relay device, where the registration request message is used to request to register the relay device and the terminal device, or the registration request message is used to request to register at least two terminal devices; and sends the registration request message to the core network node. This not only improves registration flexibility of the terminal device, but also can avoid network congestion caused when the terminal device accesses a communications network. For example, when the registration request message is used to request to register at least two devices, signaling overheads are reduced and radio resources are saved.

FIG. 12 is a schematic diagram of a communications apparatus 1200 according to an eleventh embodiment of this application. The communications apparatus 1200 may be configured to perform the steps performed by the core network node, the target core network node, or the target AMF node in the foregoing method embodiments. The communications apparatus 1200 may be a core network node, for example, an AMF node or an MME; or a chip or a system on chip in a core network node. Specifically, the communications apparatus 1200 may include a transceiver unit 1201 and a processing unit 1202.

The transceiver unit 1201 is configured to receive a registration request message from an AN node, where the registration request message is used to request to register at least two devices.

The at least two devices may include a relay device and a terminal device, and the terminal device may communicate with the AN node by using the relay device. The at least two devices may alternatively be at least two terminal devices, and the at least two terminal devices communicate with the AN node by using one relay device. A temporary relay mode may be used between the relay device and the at least two terminal devices. Refer to related descriptions in FIG. 2. Details are not described again.

The processing unit 1202 is configured to register the relay device and the terminal device based on the registration request message.

The transceiver unit 1201 is configured to send a registration accept message to the relay device.

Optionally, the registration request message includes identification information of a core network node with which the relay device is registered and/or identification information of the relay device; and further includes identification information of a core network node with which the terminal device is registered and/or identification information of the terminal device.

Optionally, the transceiver unit 1201 is further configured to:
obtain context information of the terminal device from the core network node with which the terminal device is registered; and/or
obtain context information of the relay device from the core network node with which the relay device is registered.

Optionally, the registration accept message includes:
registration area information of the relay device and registration area information of the terminal device, where a registration area corresponding to the registration area information of the relay device is the same as a registration area corresponding to the registration area information of the terminal device; and/or
registration update timer duration of the terminal device and registration update timer duration of the relay device, where the registration update timer duration of the terminal device is the same as the registration update timer duration of the relay device.

Optionally, the registration request message further includes a registration type and/or relay device indication information. The relay device indication information is used to indicate the relay device; and the registration type is used to instruct to register at least two devices.

It should be noted that the foregoing units may be implemented in a form of hardware. For example, the processing unit 1202 may be at least one processor, and the transceiver unit 1201 may be a transceiver or a communications interface. Alternatively, the foregoing units may be implemented in a form of software functional modules.

The apparatus provided in this embodiment receives the registration request message from the AN node, where the registration request message is used to request to register the relay device and the terminal device; and registers the relay device and the terminal device based on the registration request message. This not only improves registration flexibility of the terminal device, but also can avoid network congestion caused when the terminal device accesses a communications network. For example, when the registration request message is used to request to register at least two devices, signaling overheads are reduced and radio resources are saved.

FIG. 13 is a schematic diagram of a communications apparatus 1300 according to a twelfth embodiment of this application. The communications apparatus 1300 includes at least one processor 1301 and a memory 1302, and may further include a communications bus 1303 and at least one communications interface 1304. The apparatus 1300 may be any device in the embodiments of this application, and the apparatus 1300 may be configured to perform a method provided in the embodiments of this application.

The processor 1301 may be a general-purpose central processing unit (CPU), a microprocessor, an application-specific integrated circuit (application-specific integrated circuit, ASIC), or one or more integrated circuits for controlling program execution of the solutions in this application.

The memory 1302 may be a read-only memory (read-only memory, ROM), another type of static storage device that can store static information and an instruction, a random access memory (random access memory, RAM), or another type of dynamic storage device that can store information and an instruction; or may be an electrically erasable programmable read-only memory (Electrically Erasable Programmable Read-Only Memory, EEPROM), a compact disc read-only memory (Compact Disc Read-Only Memory, CD-ROM) or another optical disk storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer. However, this is not limited herein. The memory may exist independently, and is connected to the processor by using a bus. The memory may alternatively be integrated with the processor.

The communications bus 1303 may include a path for transmitting information between the foregoing components.

The communications interface 1304 may be any apparatus such as a transceiver, and is configured to communicate with another device or a communications network such as the Ethernet, a radio access network (RAN), or a WLAN.

The memory 1303 is configured to store program code, and the processor 1301 is configured to execute the program code stored in the memory 1302.

For example, the processor 1301 may include one or more CPUs, for example, a CPU 0 and a CPU 1 in FIG. 13.

For example, the apparatus 1300 may include a plurality of processors, for example, the processor 1301 and a processor 1305 in FIG. 13. Each of the processors may be a single-core (single-CPU) processor, or may be a multi-core (multi-CPU) processor. The processor herein may be one or more devices, circuits, and/or processing cores configured to process data (for example, a computer program instruction).

For example, the apparatus shown in FIG. 13 may be a terminal device or a component of a terminal device, and the memory of the apparatus shown in FIG. 13 stores one or more software modules. The apparatus shown in FIG. 13 may execute the program code in the memory by using the processor, to implement the steps performed by the terminal device in the embodiments of this application.

For example, the apparatus shown in FIG. 13 may be a relay device or a component of a relay device, and the memory of the apparatus shown in FIG. 13 stores one or more software modules. The apparatus shown in FIG. 13 may execute the program code in the memory by using the processor, to implement the steps performed by the relay device in the embodiments of this application.

For example, the apparatus shown in FIG. 13 may be an AN node or a component of an AN node, and the memory of the apparatus shown in FIG. 13 stores one or more software modules. The apparatus shown in FIG. 13 may execute the program code in the memory by using the processor, to implement the steps performed by the AN node in the embodiments of this application.

For example, the apparatus shown in FIG. 13 may be a core network node or a component of a core network node, and the memory of the apparatus shown in FIG. 13 stores one or more software modules. The apparatus shown in FIG. 13 may execute the program code in the memory by using the processor, to implement the steps performed by the core network node or the target AMF node in the embodiments of this application.

An embodiment of this application further provides a computer storage medium that stores program code. When being executed by a processor, the program may be used to perform the steps of the terminal device in the foregoing method embodiments.

An embodiment of this application further provides a computer storage medium that stores program code. When being executed by a processor, the program may be used to perform the steps of the relay device in the foregoing method embodiments.

An embodiment of this application further provides a computer storage medium that stores program code. When being executed by a processor, the program may be used to perform the steps of the AN node in the foregoing method embodiments.

An embodiment of this application further provides a computer storage medium that stores program code. When being executed by a processor, the program may be used to perform the steps of the core network node or the target AMF node in the foregoing method embodiments.

An embodiment of this application further provides a computer program product. The computer program product includes a computer software instruction, and the computer software instruction may be executed by a processor to implement a method of the terminal device in the foregoing method embodiments.

An embodiment of this application further provides a computer program product. The computer program product includes a computer software instruction, and the computer software instruction may be executed by a processor to implement a method of the relay device in the foregoing method embodiments.

An embodiment of this application further provides a computer program product. The computer program product includes a computer software instruction, and the computer software instruction may be executed by a processor to implement a method of the AN node in the foregoing method embodiments.

An embodiment of this application further provides a computer program product. The computer program product includes a computer software instruction, and the computer software instruction may be executed by a processor to implement a method of the core network node or the target AMF node in the foregoing method embodiments.

An embodiment of this application further provides a communications system, including the communications apparatuses shown in FIG. 9 to FIG. 12.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

## Claims

1. A communications method, wherein the method comprises:
obtaining, by a terminal device, a relay mode of the terminal device; and
sending, by the terminal device, relay mode information of the terminal device and registration information to a relay device;
wherein
the registration information comprises identification information of the terminal device and/or identification information of a core network node with which the terminal device is registered; or
the registration information is a registration request message;
wherein the obtaining, by a terminal device, a relay mode of the terminal device comprises:
obtaining, by the terminal device, the relay mode of the terminal device based on an idle-state camping manner of the terminal device;
wherein the obtaining, by the terminal device, the relay mode of the terminal device based on an idle-state camping manner of the terminal device comprises:
the relay mode of the terminal device is a long-term relay mode if the terminal device camps on an indirect transmission link that is a communication link between the terminal device and the relay device when the terminal device is in an idle state; or
the relay mode of the terminal device is a temporary relay mode if the terminal device camps on a direct transmission link between the terminal device and an access network AN node when the terminal device is in an idle state.

2. The method according to claim 1, wherein the method further comprises:
receiving, by the terminal device, registration area information and/or registration update timer duration of the terminal device from the relay device, wherein
a registration area corresponding to the registration area information of the terminal device is the same as a registration area of the relay device; and the registration update timer duration of the terminal device is the same as registration update timer duration of the relay device.

3. A communications apparatus for a terminal device, the apparatus comprising:
a processing unit, configured to obtain a relay mode of the terminal device; and
a transceiver unit, configured to send relay mode information of the terminal device and registration information to a relay device;
wherein
the registration information comprises identification information of the terminal device and/or identification information of a core network node with which the terminal device is registered; or
the registration information is a registration request message;
wherein the processing unit is further configured to:
obtain the relay mode of the terminal device based on an idle-state camping manner of the terminal device;
wherein the processing unit is further configured to obtain that:
the relay mode of the terminal device is a long-term relay mode if the terminal device camps on an indirect transmission link that is a communication link between the terminal device and the relay device when the terminal device is in an idle state; or
the relay mode of the terminal device is a temporary relay mode if the terminal device camps on a direct transmission link between the terminal device and an access network AN node when the terminal device is in an idle state.

## Patentansprüche

1. Kommunikationsverfahren, wobei das Verfahren umfasst:
Erhalten eines Relaismodus der Endgerätevorrichtung durch die Endgerätevorrichtung; und
Senden von Relaismodusinformationen der Endgerätevorrichtung und Registrierungsinformationen durch die Endgerätevorrichtung an eine Relaisvorrichtung;
wobei die Registrierungsinformationen Identifizierungsinformationen der Endgerätevorrichtung und/oder Identifizierungsinformationen eines Kernnetzknotens umfassen, bei dem die Endgerätevorrichtung registriert ist; oder
die Registrierungsinformationen eine Registrierungsanforderungsnachricht sind;
wobei das Erhalten eines Relaismodus der Endgerätevorrichtung durch eine Endgerätevorrichtung umfasst:
Erhalten des Relaismodus der Endgerätevorrichtung durch die Endgerätevorrichtung basierend auf einem Ruhebetrieb der Endgerätevorrichtung;
wobei das Erhalten des Relaismodus der Endgerätevorrichtung durch die Endgerätevorrichtung basierend auf einem Ruhebetrieb der Endgerätevorrichtung umfasst, dass:
der Relaismodus der Endgerätevorrichtung ein Langzeit-Relaismodus ist, wenn die Endgerätevorrichtung auf einer indirekten Übertragungsverbindung ruht, die eine Kommunikationsverbindung zwischen der Endgerätevorrichtung und der Relaisvorrichtung ist, wenn sich die Endgerätevorrichtung in einem Ruhezustand befindet; oder
der Relaismodus der Endgerätevorrichtung ein temporärer Relaismodus ist, wenn die Endgerätevorrichtung auf einer direkten Übertragungsverbindung zwischen der Endgerätevorrichtung und einem Zugangsnetz(AN)-Knoten ruht, wenn sich die Endgerätevorrichtung in einem Ruhezustand befindet.

2. Verfahren gemäß Anspruch 1, wobei das Verfahren ferner umfasst:
Empfangen von Registrierungsbereichsinformationen und/oder die Registrierungsaktualisierungszeitdauer der Endgerätevorrichtung aus der Relaisvorrichtung durch die Endgerätevorrichtung, wobei
ein Registrierungsbereich, der den Registrierungsbereichsinformationen der Endgerätevorrichtung entspricht, der gleiche wie ein Registrierungsbereich der Relaisvorrichtung ist; und die Registrierungsaktualisierungszeitdauer der Endgerätevorrichtung die gleiche wie die Registrierungsaktualisierungszeitdauer der Relaisvorrichtung ist.

3. Kommunikationsvorrichtung für eine Endgerätevorrichtung, wobei die Vorrichtung umfasst:
eine Verarbeitungseinheit, die dazu konfiguriert ist, einen Relaismodus der Endgerätevorrichtung zu erhalten; und
eine Sende-/Empfangseinheit, die dazu konfiguriert ist, Relaismodusinformationen der Endgerätevorrichtung und Registrierungsinformationen an eine Relaisvorrichtung zu senden;
wobei die Registrierungsinformationen Identifizierungsinformationen der Endgerätevorrichtung und/oder Identifizierungsinformationen eines Kernnetzknotens umfassen, bei dem die Endgerätevorrichtung registriert ist; oder
die Registrierungsinformationen eine Registrierungsanforderungsnachricht sind;
wobei die Verarbeitungseinheit ferner dazu konfiguriert ist:
den Relaismodus der Endgerätevorrichtung basierend auf einem Ruhebetrieb der Endgerätevorrichtung zu erhalten;
wobei die Verarbeitungseinheit ferner dazu konfiguriert ist, zu erhalten, dass:
der Relaismodus der Endgerätevorrichtung ein Langzeit-Relaismodus ist, wenn die Endgerätevorrichtung auf einer indirekten Übertragungsverbindung ruht, die eine Kommunikationsverbindung zwischen der Endgerätevorrichtung und der Relaisvorrichtung ist, wenn sich die Endgerätevorrichtung in einem Ruhezustand befindet; oder
der Relaismodus der Endgerätevorrichtung ein temporärer Relaismodus ist, wenn die Endgerätevorrichtung auf einer direkten Übertragungsverbindung zwischen der Endgerätevorrichtung und einem Zugangsnetz(AN)-Knoten ruht, wenn sich die Endgerätevorrichtung in einem Ruhezustand befindet.

## Revendications

1. Procédé de communication, le procédé comprenant :
l'obtention, par un dispositif terminal, d'un mode de relais du dispositif terminal ; et
l'envoi, par le dispositif terminal, d'informations de mode de relais du dispositif terminal et d'informations d'enregistrement à un dispositif de relais ;
dans lequel
les informations d'enregistrement comprennent des informations d'identification du dispositif terminal et/ou des informations d'identification d'un noeud de réseau central sur lequel le dispositif terminal est enregistré ; ou
les informations d'enregistrement sont constituées d'un message de demande d'enregistrement ;
dans lequel l'obtention, par un dispositif terminal, d'un mode de relais du dispositif terminal comprend :
l'obtention, par le dispositif terminal, du mode de relais du dispositif terminal sur la base d'une façon de stationner dans l'état inactif du dispositif terminal ;
dans lequel l'obtention, par le dispositif terminal, du mode de relais du dispositif terminal sur la base d'une façon de stationner dans l'état inactif du dispositif terminal comprend :
le mode de relais du dispositif terminal est un mode de relais à long terme si le dispositif terminal stationne sur une liaison de transmission indirecte qui est une liaison de communication entre le dispositif terminal et le dispositif de relais lorsque le dispositif terminal est dans un état inactif ; ou
le mode de relais du dispositif terminal est un mode de relais temporaire si le dispositif terminal stationne sur une liaison de transmission directe entre le dispositif terminal et un noeud de réseau d'accès AN lorsque le dispositif terminal est dans un état inactif.

2. Procédé selon la revendication 1, le procédé comprenant en outre :
la réception, par le dispositif terminal, d'informations de zone d'enregistrement et/ou d'une durée de temporisateur de mise à jour d'enregistrement du dispositif terminal depuis le dispositif de relais, dans lequel
une zone d'enregistrement correspondant aux informations de zone d'enregistrement du dispositif terminal est identique à une zone d'enregistrement du dispositif de relais ; et la durée de temporisateur de mise à jour d'enregistrement du dispositif terminal est identique à la durée de temporisateur de mise à jour d'enregistrement du dispositif de relais.

3. Appareil de communication pour un dispositif terminal, l'appareil comprenant :
une unité de traitement, configurée pour obtenir un mode de relais du dispositif terminal ; et
une unité d'émission-réception, configurée pour envoyer des informations de mode de relais du dispositif terminal et des informations d'enregistrement à un dispositif de relais ;
dans lequel
les informations d'enregistrement comprennent des informations d'identification du dispositif terminal et/ou des informations d'identification d'un noeud de réseau central sur lequel le dispositif terminal est enregistré ; ou
les informations d'enregistrement sont constituées d'un message de demande d'enregistrement ;
dans lequel l'unité de traitement est en outre configurée pour :
obtenir le mode de relais du dispositif terminal sur la base d'une façon de stationner dans l'état inactif du dispositif terminal ;
dans lequel l'unité de traitement est en outre configurée pour obtenir que :
le mode de relais du dispositif terminal soit un mode de relais à long terme si le dispositif terminal stationne sur une liaison de transmission indirecte qui est une liaison de communication entre le dispositif terminal et le dispositif de relais lorsque le dispositif terminal est dans un état inactif ; ou
le mode de relais du dispositif terminal soit un mode de relais temporaire si le dispositif terminal stationne sur une liaison de transmission directe entre le dispositif terminal et un noeud de réseau d'accès AN lorsque le dispositif terminal est dans un état inactif.
